# EUROPEAN PATENT SPECIFICATION

(11) **EP 4 509 091 B1**
(45) Date of publication and mention of the grant of the patent: **06.05.2026**
(21) Application number: 23191943.2
(22) Date of filing: 17.08.2023
(51) Int. Cl.: A61C 7/08, A61C 7/00

(54) **METHOD OF PRODUCING A DENTAL ALIGNER AND PRODUCTION LINE THERETO**
VERFAHREN ZUR HERSTELLUNG EINES DENTALEN ALIGNERS UND PRODUKTIONSLINIE DAFÜR
PROCÉDÉ DE FABRICATION D'UN ALIGNEUR DENTAIRE ET LIGNE DE FABRICATION ASSOCIÉE

(43) Date of publication of application: 19.02.2025
(73) Proprietor: K Line Europe GmbH, 40589 Düsseldorf (DE)
(72) Inventor: Kandil, Sherif, 40474 Düsseldorf (DE)
(74) Representative: Kalkoff & Partner Patentanwälte mbB

(56) References cited:
- US-A1- 2018 250 099
- US-A1- 2023 141 168
- US-B2- 10 806 546

## Description

The invention refers to a method of producing a dental aligner for a treatment plan with at least an actual position and a target position of a tooth to be re-positioned and a production line to produce such a dental aligner.

In order to re-position a tooth, the actual position of the tooth and the target position are determined and a treatment plan is developed devising how to achieve the re-positioning of said tooth. The dental aligner is the tool to carry out the re-positioning. Usually, a set of dental aligners is used to consecutively change the position of the tooth to be re-positioned in a step-by-step approach. Dental aligners well-suited to carry out such a treatment plan are described e. g. in WO 2016/193 424 A1 as being made from a dynamic synthetic material. Said dynamic synthetic material can be shaped into a dental aligner having a first shape, then pressure and or increased or reduced temperature can be applied to change the dental aligner into a second shape. From said second shape, the dental aligner will return into the previous, first shape once a stimulus, e.g. temperature or humidity, are applied thereto. Manufacture of said dental aligners or sets of dental aligners as described e.g. in US 2018/250 009 A1 is not yet optimized.

It is therefore an object of the present invention to propose an improvement of the manufacturing method and equipment for a dental aligner or sets of dental aligners.

This object is obtained by a method according to claim 1 and a production line according to claim 5.

The method according to the invention of producing a dental aligner for a treatment plan with at least an actual position and a target position of a tooth to be re-positioned, comprises the steps of
- producing a set of dental models comprising at least
   - a first dental model based on the actual position and
   - a second dental model based on the target position;
- carrying out a first thermoforming step of shaping an aligner material onto the second dental model to produce an aligner;
- removing the aligner from the second dental model;
- placing the aligner on the first dental model;
- carrying out a second thermoforming step of re-shaping the aligner onto the first dental model,
- wherein a second thermoforming temperature of the second thermoforming step is lower than a first thermoforming temperature of the first thermoforming step.

The method according to the invention relies on a set of dental models. Said models represent the actual position of the tooth to be re-positioned in a first dental model and the target position in a second dental model. The set may comprise further dental models representing intermediate positions. The dental models are manufactured either based upon a cast made from a tooth or they are made based upon digital data. The latter is preferred when making dental models for the target position or intermediate positions. The dental models are made from e. g. gypsum or a synthetic material. They are formed with a plinth which is used to fix the dental model, e. g. to be worked with a tool or for shaping a dental aligner onto said dental model.

For producing one dental aligner, at least two dental models are required, a first model representing the actual position of the tooth to be re-positioned and a second model to represent either the target position or an intermediate position which shall be achieved next by the tooth to be re-positioned. This text refers to one tooth to be re-positioned but of course the teaching applies to the re-positioning of two or more teeth.

The dental aligner is shaped by a first thermoforming step, said step comprising shaping an aligner material onto the second dental model, i. e. onto the dental model which bears a shape closer to the target position. The aligner material is preferably a shape-memory synthetic polymer (SMP) or metal material (shape memory alloy SMA). The aligner material is usually supplied as a sheet material, preferably as an endless sheet material. The shaping usually includes increasing the temperature of the aligner material and changing the pressure from atmospheric pressure to either vacuum or to a pressure higher than atmospheric pressure. The aligner material is shaped so that it shows a negative of the dental model without any cavities. The aligner material shaped onto the dental model usually covers at least part of the plinth in order to be sure that the entire tooth or part of tooth that shall be re-positioned is properly covered by the aligner material. The dental aligner manufactured as a result of the first thermoforming step is then removed from the second dental model. If necessary, a cooling step can precede the removal of the dental aligner in order to stabilize the aligner shape.

The shaping of a dental aligner as described above with regard to the first thermoforming step applies to further shaping steps, too, although in the second thermoforming step the dental aligner is shaped onto the first dental model and temperature and/or pressure may vary compared to the first thermoforming step.

According to the method of claim 1, the dental aligner is placed on the first dental model. There, a second thermoforming step is carried out, thereby re-shaping the dental aligner onto the first dental model. According to a preferred embodiment, the temperature applied to the dental aligner during the second thermoforming step is preferably lower than the temperature applied to the aligner material during the first thermoforming step. Alternatively, the temperature of the second thermoforming step may be higher compare to the temperature applied during the first thermoforming step. Likewise, the pressure applied to the dental aligner during the second thermoforming step may be higher or lower compared to the pressure applied to the dental aligner material during the first thermoforming step. While different thermoforming units may be used to produce the aligner, it is also possible to use one thermoforming unit to alternately execute the first and the second thermoforming step.

The second thermoforming step imparts a different shape to the dental aligner, but if shape-memory material is used, the dental aligner will "store" the initial shape of the first thermoforming step. The initial shape of the dental aligner can be released by applying a stimulus to the dental aligner, e. g. increased temperature and/or humidity. The re-shaped dental aligner fits with the tooth to be re-positioned in its present situation. Once the dental aligner has been placed onto said tooth, the stimulus can be applied to release the shape of the target position or the intermediate target position and the tooth will be moved by the aligner to achieve said (intermediate) target position. The method according to claim 1 claims a dental aligner storing two different shapes. It is obvious that three or more different shapes can be stored, each shape being imparted by thermoforming, preferably by individual thermoforming conditions with regard to e. g. temperature and/or pressure and each shape being released by an individual stimulus, e. g. temperature and/or humidity and each shape being imparted by using one dental model of the set of dental models. The last shape to be imparted to the dental aligner is preferably the shape corresponding with the present position of the tooth to be re-positioned and the last shape to be released is preferably the shape closest or identical with the (intermediate) target position to be reached with said aligner. Producing a dental aligner that stores at least two different shapes advantageously reduces the number of necessary aligners for a treatment plan.

The first, second and/or any additional thermoforming step preferably depend on creating a different environment for thermoforming the aligner material or the dental aligner. The environment criteria may include heating temperature, infrared or near infrared, humidity, pressure, magnetic waves, electric waves, or any tangible force or a combination of two or more of the aforementioned parameters. Thermoforming may be conducted by creating a specific atmosphere (temperature, humidity) into which the aligner material to be shaped or aligner to be re-shaped is placed. Preferably, thermoforming takes place by applying non-tangible forces like e. g. infrared, near infrared, magnetic waves and/or electric waves. It is, however, also preferred to apply tangible force to the dental aligner material to shape the dental aligner to the new geometry of the dental model or to apply tangible force to an aligner to be re-shaped, e. g. by applying a die or a form showing the resulting shape or by a semi or fully conducting material applied on the aligner material or dental aligner on the side which is not in contact with the dental model providing the future shape of the aligner material or aligner. The tangible force application is preferably applied by a semi or fully conducting material. This material shall preferably conduct the required environment criteria, e. g. humidity or temperature. For example, this material may be a pre-heated plastic material, preferably but not necessarily, a silicon sheet that may be thermoformed over the dental aligner to force it to shape into or re-shape into the new geometry. The tangible force application process ideally works in harmony with the environment created for the ensuing thermoforming step or steps. Alternatively, or additionally, the application of tangible force for shaping or re-shaping may also be done manually, e.g., with human hands and fingers to adapt the dental aligner on the model geometry. Shaping or re-shaping the aligner may, however, be executed without tangible forces at all and depend solely on the environment criteria created for the following thermoforming cycles. Also, a combination of non-tangible and tangible forces may be applied.

According to the method according to the invention each dental model of a dental model set receives a unique model identifier to identify the at least first and second dental models of a set of dental models. The unique model identifier identifies the set of dental models and the specific dental model which is part of the set. The set is made to order for a specific tooth to be re-positioned. The unique model identifier may be taken from a group of identifiers including letters, numbers, symbols, colours, bar codes, QR codes, 3-D codes or other codes or of a combination of the aforementioned codes. The unique model identifier is fixed to the specific dental model to which it belongs. The unique model identifier may be fashioned in the form of a label or a chip and may be glued or tacked onto the dental model, it may be written or printed on the dental model or may be affixed to the dental model in any other way onto the specific dental model. According to a preferred embodiment, the unique model identifier is worked into the surface of the plinth, e. g. by engraving or by fashioning the identifier into the plinth during additive manufacturing of the dental model, e. g. by 3-D printing of the dental model. Thereby, the identifier cannot be lost and the dental model will always be easy and clearly identifiable. Further, it is preferred that the unique model identifier can be read by a sensor, e. g. a camera. Applying unique model identifiers to the dental models of a set of dental models advantageously enables sorting and allocation of the dental models in such a way, that two or more successive thermoforming steps can be carried out on a dental model.

An aligner formed on a second model can be provided by a unique aligner identifier, said unique aligner identifier indicating that the aligner belongs to the set of dental models of which said second model is part of. Providing a unique aligner identifier is especially facilitated by a sensor-readable unique model identifier. According to the method according to the invention, the unique aligner identifier is coded in a way to link the dental aligner to the next model upon which the next thermoforming step is to be conducted, i.e., upon the first dental model. Thus, the unique aligner identifier is preferably always directed towards the next dental model upon which a thermoforming step is to be conducted, said next dental model being usually the model imparting a shape of a tooth position less advanced, e. g. an actual or earlier intermediate position compared to the second model used for the first thermoforming step. It is thus preferably set to relate regressively to the previous dental model of a set of dental models. Preferably, the aligner formed on a second model is marked with a unique aligner identifier different to the unique model identifier of the related set of dental models, i.e., with a digit number earlier in count than the unique model identifier. In order to avoid additional control steps, a unique aligner identification indicating which model has to be used next simplifies production and adds to safety of production as only a one-step-control of the respective unique identifiers is required.

Regarding the production of dental models as a step towards producing dental aligners, it has been found by the inventor that multiple dental models of one or of a plurality of sets of dental models can be manufactured at the same time for the same treatment plan or different treatment plans randomly and/or batchwise, wherein
- the unique model identifiers include information about a related set of models
- the dental aligners to be thermoformed onto the dental models are provided with unique aligner identifiers, and
- the dental models and the dental aligners related thereto are being matched by using the unique model identifier and the matching unique aligner identifier.

Thus, the use of unique identifiers on the dental models of a set and the corresponding aligners allows random production of dental models or batchwise production of dental models without causing unnecessary checks for corresponding models or without taking steps to ensure that a specific sequence of dental models is maintained. If dental models are created by additive manufacturing, e. g. 3-D printing, the set of data used for creating the dental model can include the necessary information about the unique model identifier so that the unique model identifier is applied onto the dental model during or after manufacturing e. g. on the plinth of the dental model.

Usually, at least two dental models of a set of dental models are being manufactured at the same time, the first dental model representing the actual state of the tooth to be re-positioned and the second dental model representing the (intermediate) target position of said tooth. When using said dental model to thermoform the dental aligner from aligner material, the unique model identifier of the second dental model is read, e. g. by a control unit, and a corresponding unique aligner identifier is created, e. g. by said control unit, and said unique aligner identifier is applied onto the dental aligner. Preferably, the unique aligner identifier includes an indication that the first dental model of the set of dental models shall be used for the at least one second thermoforming step to be executed on the dental aligner.

If the dental aligner is manufactured from aligner material, there is usually surplus material attached to the dental aligner after the first thermoforming step. Handling of the dental aligner is facilitated if said surplus material is trimmed automatically. Trimming can be conducted after the first thermoforming step. However, as the second thermoforming step requires a further change of shape, it is preferred to either conduct the trimming after the second or last thermoforming step or to perform an additional trimming step after the second or last thermoforming step. Trimming is preferably performed on the dental aligner after the respective thermoforming step while the aligner is positioned on the dental model.

According to a preferred embodiment, the method of producing a dental aligner comprises a first dental model of a set of dental models that is produced based on the actual position of the tooth to be re-positioned and a second dental model of the set of dental models that is produced based on an intermediate target position of the tooth to be re-positioned, wherein
- the set of dental models further comprises at least a third dental model based on a final target position of the tooth to be corrected, wherein
- aligner material is thermoformed onto the third dental model to produce an aligner with an original shape representing the final target position,
- the aligner with the original shape is thermoformed onto the second dental model to achieve a first modified shape representing the intermediate position and
- the aligner with the first modified shape is thermoformed onto the first dental model to achieve a second modified shape representing the actual position of the tooth to be re-positioned.

The aforementioned embodiment indicates that the dental aligner can contain more than two different shapes. Each shape may be released by a specific stimulus. Using a dental aligner containing more than two different shapes representing e. g. an intermediate target position and a final target position may be comfortable to the user. Such a dental aligner is easy to manufacture using the unique identifier technique explained above.

A preferred embodiment of the method according to the invention comprises packaging of the dental aligner after the second or final thermoforming step and receiving an identifying label to identify the dental aligner and optionally receive additional information about the dental aligner, e. g. storage, use and/or maintenance information. The identifying label is preferably based upon information taken from the dental aligner. The information may be picked up by a sensor forwarding said information to a control unit. Said control unit may then prepare an identifying label comprising e. g. a unique identifier for the dental aligner, customer information like name and address, information about storage, use and/or maintenance information regarding the dental aligner. The identifier label is then printed and applied to the dental aligner or preferable to the packaging of the dental aligner.

The invention further relates to a production line for producing a dental aligner comprising a production unit to produce at least one dental model, a first thermoforming unit to thermoform aligner material into a dental aligner by applying the aligner material onto a dental model, preferably the second dental model, and at least a second thermoforming unit to thermoform the dental aligner onto a dental model, preferably onto the first dental model.

While a dental model representing the actual position of the tooth to be re-positioned may be created on site, the at least one dental model representing an (intermediate) target position is created based upon a set of data usually provided by or stored in a production control device. The production unit to produce the at least one dental model comprises thus said production control device which is linked to a manufacturing unit, typically a 3-D printer. The 3-D printer is linked to one or more material supplies, depending on the material or the combination of materials required for the production of the dental model, e. g. a first material for a plinth and a second material for the dental model itself. The 3-D printer may be equipped to manufacture a plurality of dental models, said plurality of dental models belonging to one or more sets of dental models. Thus, the production line may provide for random or batchwise production, the production being controlled by the production control device.

Each dental model is preferably manufactured with a first section showing the tooth to be re-positioned and with a plinth as a second section. The plinth is preferably shaped to be form-fitting with a mounting device of the thermoforming units, thereby facilitating handling of the dental model, especially automatic handling of the model.

Further, the production unit comprises means for applying a unique model identifier (identifier means) to a specific dental model. Said identifier means may comprise e. g. a printer, a milling tool, a labelling device and/or a colouring device. Application of the unique model identifier is controlled and directed by the production control device. According to a preferred embodiment, the unique model identifier is applied by the 3-D printer, said printer which preferably executes the identifier on the plinth of the model, either by applying additional material to create an identifier comprising an extra layer of material (positive identifier) or by omitting application of material, thereby creating a groove (negative identifier).

The first thermoforming unit comprises a mounting device for the dental model and adaption means to adapt the thermoforming parameters so that aligner material can be thermoformed onto the dental model mounted onto the mounting device. Thermoforming parameters may include one or more of the group of heating temperature, cooling methods, pressure, humidity, magnetic fields, infrared or near infrared material treatment but also with or without the application of tangible force.

The mounting device is preferably shaped so that the dental model can be placed form-fittingly. Usually, the mounting device is housed in a casing and the temperature and/or pressure conditions inside that casing can be adjusted and controlled by a first thermoforming control device.

The dental aligner to be thermoformed onto the dental model may be made from pieces of aligner material placed above the dental model. Preferably, the aligner material is fed by a feeding device from an endless supply of aligner material. The first thermoforming unit may further comprise a cutting device designed to cut a surplus of thermoforming material from the dental aligner or to cut the dental aligner from the endless supply of aligner material. The cutting device may comprise a cutter or a milling tool which are controlled by the first thermoforming control device.

If a dental model with a unique model identifier is supplied to the mounting device, the first thermoforming unit preferably has a reading device to read the identifier and to forward the identifier information to the first thermoforming control device.

The first thermoforming unit may also comprise a labelling device designed to apply a label onto the dental aligner. This labelling device may comprise a printer, a colouring tool, a milling tool or a punching tool or an embossing tool to create a unique identifier into the surface of a dental aligner and/or a labelling tool to apply a label onto the dental aligner. The unique aligner identifier to be applied to the dental aligner is created by or stored in the first thermoforming control device, said control device directing the labelling device to act during or after first thermoforming the dental aligner. The unique aligner identifier is preferably related to the unique model identifier if such a unique model identifier is provided. The first thermoforming control device may be equipped with an algorithm generating a unique aligner identifier related to the set of dental models and specifically indicating that the dental aligner is related to the next dental model onto which the dental aligner shall be thermoformed in a second thermoforming step.

The second thermoforming unit is designed to re-shape the dental aligner and comprises a mounting device for the dental model and adaption means to adapt the thermoforming parameters so that the shape of the dental aligner can be changed by thermoforming onto the dental model.

The mounting device is preferably shaped so that the dental model can be placed form-fittingly. Usually, the mounting device is housed in a casing and the temperature and/or pressure conditions inside that casing can be adjusted and controlled by a second thermoforming control device. The number of mounting devices preferably corresponds with the number of dental models transported or handled, e.g., in the first or second thermoforming step, simultaneously. The number of mounting devices may be higher than the number of produced aligners because of the re-shaping of the aligners in the second thermoforming step.

The first and the second thermoforming unit may physically be the same unit but will then be used alternatively for a first thermoforming step or a second thermoforming step. The first and the second thermoforming unit may operate with different thermoforming parameters.

The second thermoforming unit may further comprise a cutting device designed to cut a surplus of thermoforming material from the dental aligner. The cutting device may comprise a cutter or a milling tool which are controlled by the second thermoforming control device.

If a dental model with a unique model identifier is supplied to the mounting unit, the first thermoforming unit preferably has identifying means, e.g., a reading device to read the identifier and to forward the identifier information to the first thermoforming control device. Said reading device can also be used to read a unique aligner identifier if the dental aligner is equipped with such an identifier. Thus, the reading device may forward the information read from dental model and aligner and forward it to the second thermoforming control device which may then check if both unique identifiers correspond with each other. This simple arrangement allows for a fast and safe checking that dental model and dental aligner indeed correspond with each other.

Optionally, the second thermoforming unit may comprise a re-labelling device which re-labels the dental aligner if a third thermoforming step is intended. The re-labelling device would be designed and arranged according to the labelling devices described above. In addition, it is preferred that the re-labelling device is arranged so that it either removes or covers earlier labels applied to the dental aligner so that at any time only one label can be read from the dental aligner.

The production line may further comprise a packaging unit for packaging the finished dental aligner. The packaging unit has a packaging supply device which furnishes a bag and/or carton or other emballage for the dental aligner and a packaging device for placing the dental aligner into said bag, carton or other emballage and optionally a packaging reading device for reading a unique aligner identifier, the information of the unique aligner identifier being forwarded to a packaging control device. Said packaging control device preferably coordinates furnishing of the bag, carton or emballage and placement of the dental aligner therein. Optionally, the packaging control device receives the information of the unique aligner identifier and provides information about e. g. the customer (e. g. name, address, details about the treatment plan), the courier service and/or the use, the care and/or the maintenance of the dental aligner.

The aforementioned units of the production line may be linked by manual transport or -preferably- by transport devices. Also, the control devices of the units of the production line may be linked or one central control device is used for several or all units of the production line. Preferably, the transport device and or the control devices, especially the central control device, are built to virtually and/or physically operate dental aligners and dental models from more than one set of dental models and relate them to one another in the same treatment batch.

Details of the invention are explained below with regard to an exemplary embodiment. In the figures:
- Fig.1: shows a schematic view of a production line for producing a dental aligner and
- Fig.2: shows a process diagram of the schematic production of a dental aligner for a treatment plan.

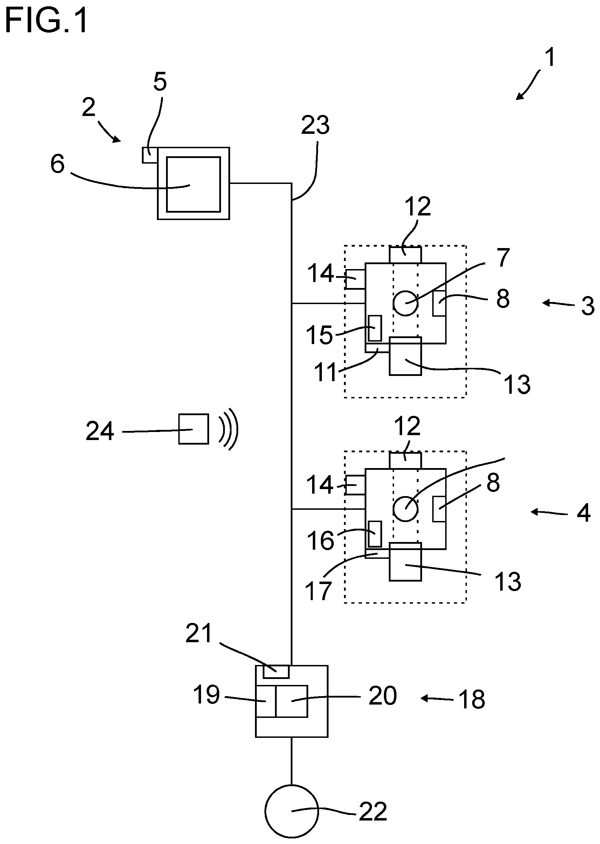

Figure 1 shows an exemplary embodiment of a production line 1 for producing a dental aligner comprising a production unit 2 to produce at least one dental model, a first thermoforming unit 3 and at least a second thermoforming unit 4.

The production unit 2 comprises a production control device 5 which is linked to a manufacturing unit 6, typically a 3-D printer. The manufacturing unit 6 is linked to one or more material supplies, depending on the material or the combination of materials required for the production of the dental model, e. g. a first material for a plinth and a second material for the dental model itself. The manufacturing unit 6 may be equipped to manufacture simultaneously a plurality of dental models, said plurality of dental models belonging to one or more sets of dental models. Thus, the production line 1 may provide for random or batchwise production, the production being controlled by the production control device 5.

The first thermoforming unit 3 preferably comprises a mounting device 7 for the dental model and adaption means to adapt the thermoforming parameters, e.g., temperature, humidity and/or tangible forces, e.g., pressure and/or non-tangible forces like e. g., infrared, near infrared, magnetic waves and/or electric waves 8, e.g., a pressure chamber, air valves, heat elements, etc. The mounting device 7 is preferably shaped so that the dental model can be placed form-fittingly. Usually, the mounting device 7 is housed in a casing 10 and the humidity ambience conditions, temperature and/or pressure conditions inside that casing can be adjusted and controlled by a first thermoforming control device 11. Likewise, sources of radiation (microwave, IR, near IR) and/or magnetic and/or electric waves may be part of the first thermoforming unit. Also, means for applying tangible force may be part of the first thermoforming unit 3, e.g., a die or form for shaping the aligner material.

The first thermoforming unit 3 preferably comprises a feeding device 12 with an endless supply of aligner material and a cutting device 13. The cutting device 13 may comprise a cutter or a milling tool which are controlled by the first thermoforming control device 11.

The first thermoforming unit 3 preferably has a reading device 14 to read the identifier and to forward the identifier information to the first thermoforming control device 11.

The first thermoforming unit 3 may also comprise a labelling device 15 designed to apply a label onto the dental aligner. This labelling device 15 may comprise a printer, a colouring tool, a milling tool or a punching tool or an embossing tool to create a unique identifier into the surface of a dental aligner and/or a labelling tool to apply a label onto the dental aligner.

The first and the second thermoforming unit 3, 4 are preferably physically the same unit equipped as described above but are used for either a first thermoforming step or a second thermoforming step. The second thermoforming unit 4 is designed to re-shape the dental aligner and instead of a labelling device 15 it may comprise a re-labelling device 16 which re-labels the dental aligner if a third thermoforming step is intended. The re-labelling device 16 would be designed and arranged according to the labelling device 15 described above. In addition, it is preferred that the re-labelling device 16 is arranged so that it either removes or covers earlier labels applied to the dental aligner so that at any time only one label can be read from the dental aligner. The second thermoforming unit 4 may further comprise a second thermoforming control device 17.

The production line 1 may further comprise a packaging unit 18 for packaging the finished dental aligner. The packaging unit 18 has a packaging supply device 19 which furnishes a bag and/or carton or other emballage for the dental aligner and a packaging device 20 for placing the dental aligner into said bag, carton or other emballage and optionally a packaging reading device 21 for reading a unique aligner identifier, the information of the unique aligner identifier being forwarded to a packaging control device 22. Optionally, the packaging control device 22 receives the information of the unique aligner identifier and provides information about e. g. the customer (e. g. name, address, details about the treatment plan), the courier service and/or the use, the care and/or the maintenance of the dental aligner.

The aforementioned units of the production line 1 may be linked by manual transport or -preferably- by transport devices 23. Also, the control devices 5, 11, 17, 22 of the units of the production line 1 are linked with a central control device 24 which is used to control all units of the production line 1.

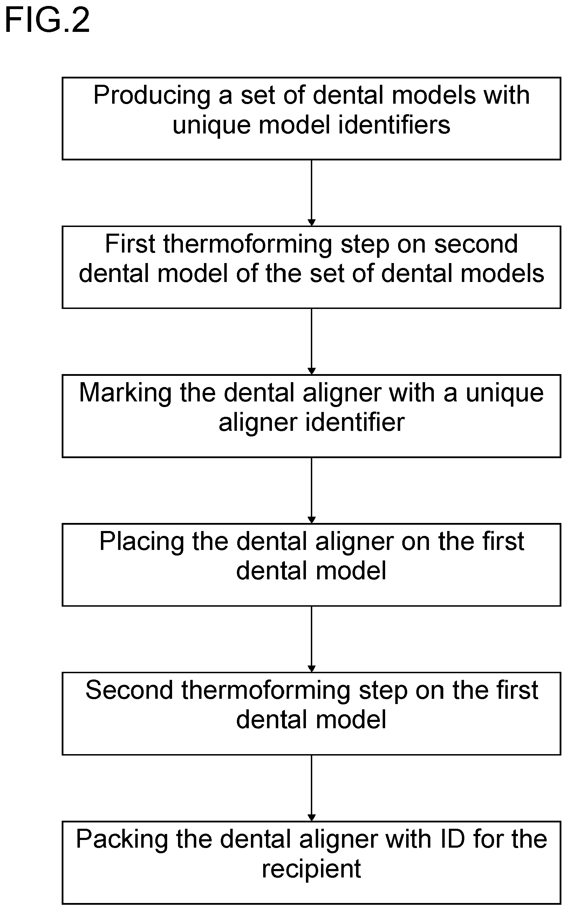

Figure 2 shows a process diagram of a method for producing a dental aligner for a treatment plan with the afore-mentioned production line 1 is described below.

For producing one dental aligner, at least two dental models are required, a first model representing the actual position of the tooth to be re-positioned and a second model to represent either the target position or an intermediate position which shall be achieved next by the tooth to be re-positioned. This exemplary embodiment refers to one tooth to be re-positioned but of course the teaching applies to the re-positioning of two or more teeth. More dental models of intermediate positions might be necessary for the production of the dental aligner.

The dental models of a set of dental models are produced by the manufacturing unit 6 of the production unit 2. The at least one dental model representing an (intermediate) target position is created based upon a set of data usually provided by or stored in the production control device 5.

Each dental model of the dental model set receives a unique model identifier to identify the at least first and second dental model of the set of dental models. The unique model identifier is applied by the manufacturing unit 6, e.g., by the 3-D printer which preferably executes the identifier on a plinth of the model, either by applying additional material to create an identifier comprising an extra layer of material (positive identifier) or by omitting application of material, thereby creating a groove (negative identifier). The use of unique identifiers on the dental models of a set and the corresponding aligners allows random production of dental models or batchwise production of dental models without causing unnecessary checks for corresponding models or without taking steps to ensure that a specific sequence of dental models is maintained. If dental models are created by additive manufacturing, e. g. 3-D printing, the set of data used for creating the dental model can include the necessary information about the unique model identifier so that the unique model identifier is applied onto the dental model during or after manufacturing.

The dental aligner is shaped in the first thermoforming unit 3 by a first thermoforming step, said step comprising shaping the endless aligner material from the feeding device 12 onto the second dental model mounted on the mounting device 7. The shaping usually includes increasing the temperature of the aligner material and changing the pressure from atmospheric pressure to either vacuum or to a pressure higher than atmospheric pressure.

The aligner material is preferably a shape-memory synthetic polymer (SMP) or metal material (shape memory alloy SMA). The aligner material is usually supplied as a sheet material, preferably as an endless sheet material. The aligner material is shaped so that it shows a negative of the dental model without any cavities. The aligner material shaped onto the dental model usually covers at least part of the plinth in order to be sure that the entire tooth or part of tooth that shall be re-positioned is properly covered by the aligner material.

An aligner formed on the second model can be provided with a unique aligner identifier, said unique aligner identifier indicating that the aligner belongs to the set of dental models of which said second model is part of. The unique aligner identifier is preferably always directed towards the next dental model upon which a thermoforming step is to be conducted, said next dental model being usually the model imparting a shape of a tooth position less advanced, e. g. an actual or earlier intermediate position compared to the second model used for the first thermoforming step. It is thus preferably set to relate regressively to the previous dental model. The unique aligner identifier to be applied to the dental aligner is created by or stored in the first thermoforming control device 11, said control device 11 directing the labelling device 15 to act during or after first thermoforming the dental aligner. The unique aligner identifier is preferably related to the unique model identifier if such a unique model identifier is provided. The first thermoforming control device 11 may be equipped with an algorithm generating a unique aligner identifier related to the set of dental models and specifically indicating that the dental aligner is related to the next dental model onto which the dental aligner shall be thermoformed in a second thermoforming step.

If the dental aligner is manufactured from aligner material, there is usually surplus material attached to the dental aligner after the first thermoforming step. Handling of the dental aligner is facilitated if said surplus material is trimmed automatically. Trimming can be conducted after the first thermoforming step. However, as the second thermoforming step requires a further change of shape, it is preferred to either conduct the trimming after the second or last thermoforming step or to perform an additional trimming step after the second or last thermoforming step. Trimming is preferably performed on the dental aligner after the respective thermoforming step with while the aligner is positioned on the dental model. The cutting device 13 of the thermoforming units 3, 4 cuts a surplus of thermoforming material from the dental aligner and/or cuts the dental aligner from the endless supply of aligner material.

The dental aligner manufactured as a result of the first thermoforming step is then removed from the second dental model. If necessary, a cooling step can precede the removal of the dental aligner in order to stabilize the aligner shape.

The shaping of a dental aligner as described above with regard to the first thermoforming step applies to further shaping steps, too, although in the second and any further thermoforming step the dental aligner is shaped onto the first and/or previous dental model and temperature and/or pressure may vary compared to the first thermoforming step.

The first, second and/or any additional thermoforming step preferably depend on creating a different environment for thermoforming the aligner material or the dental aligner. The environment criteria may include heating temperature, infrared or near infrared, humidity, pressure, magnetic waves, electric waves, or any tangible force or a combination of two or more of the aforementioned parameters.

Thermoforming may be conducted by creating a specific atmosphere (temperature, humidity) inside the casing 10 of the first and/or second thermoforming unit 3, 4 into which the aligner material to be shaped or aligner to be re-shaped is placed. Preferably, thermoforming takes place by applying non-tangible forces like e. g. infrared, near infrared, magnetic waves and/or electric waves. It is, however, also preferred to apply tangible force to the dental aligner material to shape the dental aligner to the new geometry of the model or to apply tangible force to an aligner to be re-shaped, e. g. by applying a die or a form showing the resulting shape or by a semi or fully conducting material applied on the aligner material or dental aligner on the side which is not in contact with the model providing the future shape of the aligner material or aligner.

The tangible force application is preferably applied by a semi or fully conducting material. This material shall preferably conduct the required environment criteria, e. g. humidity or temperature. For example, this material may be a pre-heated plastic material, preferably but not necessarily, a silicon sheet that may be thermoformed over the dental aligner to force it to shape into or re-shape into the new geometry. The tangible force application process ideally works in harmony with the environment created for the ensuing thermoforming step or steps.

Alternatively, or additionally, the application of tangible force for shaping or re-shaping may also be done manually, e.g., with human hands and fingers to adapt the dental aligner on the model geometry. Shaping or re-shaping the aligner may, however, be executed without tangible forces at all and depend solely on the environment criteria created for the following thermoforming cycles. Also, a combination of non-tangible and tangible forces may be applied.

The dental aligner is placed on the first dental model mounted on the mounting device 7 in the second thermoforming unit 4. The reading devices 14 of the second thermoforming control device 17 can be used to read the unique aligner identifier if the dental aligner is equipped with a corresponding identifier. Thus, the reading device 14 from the second thermoforming control device 17 may forward the information read from dental model and aligner to the first thermoforming control unit 11 which may then check if both unique identifiers correspond with each other. This simple arrangement allows for a fast and safe checking that dental model and dental aligner indeed correspond with each other.

In the second thermoforming unit 4, a second thermoforming step is carried out, thereby re-shaping the dental aligner onto the first dental model. The conditions, e.g., the temperature, humidity, non-tangible and/or tangible forces, applied to the dental aligner during the second thermoforming step are preferably milder than the conditions applied to the aligner material during the first thermoforming step.

For example, the temperature applied to the dental aligner during the second thermoforming step is lower than the temperature applied to the aligner material during the first thermoforming step. Likewise, the pressure applied to the dental aligner during the second thermoforming step may be higher or lower compared to the pressure applied to the dental aligner material during the first thermoforming step.

While both, the first and second thermoforming units 3, 4 are preferably separately used to produce the aligner, it is also possible to use one single thermoforming unit to alternately execute the first and the at least one second thermoforming step.

Usually, at least two dental models of a set of dental models are being manufactured at the same time, the first dental model representing the actual state of the tooth to be re-positioned and the second dental model representing the (intermediate) target position of said tooth. When using said dental model to thermoform the dental aligner from aligner material, the unique model identifier of the second dental model is read, e. g. by the reading devices 14 of the first thermoforming control unit 11 and a corresponding unique aligner identifier is created, e. g. by the labelling device 15 of the first thermoforming control unit 11 and said unique aligner identifier is applied onto the dental aligner.

After the second or final thermoforming step the dental aligner is packaged in the packaging unit 18 by the packaging device 20 and the packaging supply unit 19. The unique aligner identifier is captured by the packaging reading device 21. The control device 22 may then prepare an identifying label comprising e. g. a unique identifier for the dental aligner, customer information like name and address, information about storage, use and/or maintenance information regarding the dental aligner. The identifier label is then printed and applied to the dental aligner or preferable to the packaging of the dental aligner.

In another exemplary embodiment, the first and the at least second thermoforming steps may be carried out in one thermoforming unit containing two thermoforming chambers. The first thermoforming step heats the thermoplastic material in a first isolated chamber to almost melting point to permanently thermoform the dental aligner on the geometry of the first dental model from a set of dental models. The second thermoforming step heats the dental aligner in a second isolated chamber with a different environment (some but not necessarily all the following: heat, pressure, humidity, magnetic field, etc.) than in the first isolated chamber. The dental aligner is thermoformed in a way that allows temporary deformation of the geometry of the dental aligner on the second dental model from the set of dental models.

The dental aligner can further contain more than two different shapes. Using a dental aligner containing more than two different shapes representing e. g. an intermediate target position and a final target position may be comfortable to the user. Multiple dental models of one or of a plurality of sets of dental models can be manufactured at the same time for the same treatment plan or different treatment plans randomly and/or batchwise. The dental models and the dental aligners related to a set of dental models are being matched by using the unique model identifier and the matching unique aligner identifier.

### Reference sign list

- 1: production line
- 2: production unit
- 3: first thermoforming unit
- 4: second thermoforming unit
- 5: production control device
- 6: manufacturing unit
- 7: mounting device
- 8: adaption means
- 10: casing
- 11: first thermoforming control device
- 12: feeding device
- 13: cutting device
- 14: reading device
- 15: labelling device
- 16: re-labelling device
- 17: second thermoforming control device
- 18: packaging unit
- 19: packaging supply unit
- 20: packaging device
- 21: packaging reading device
- 22: packaging control device
- 23: transport device
- 24: central control device

## Claims

1. Method of producing a dental aligner for a treatment plan with at least an actual position and a target position of a tooth to be re-positioned, comprising the steps of
- producing a set of dental models comprising at least
- a first dental model based on the actual position and
- a second dental model based on the target position;
- carrying out a first thermoforming step of shaping an aligner material onto the second dental model to produce an aligner;
- removing the aligner from the second dental model;
- placing the aligner on the first dental model;
- carrying out a second thermoforming step of re-shaping the aligner onto the first dental model,
- wherein a second thermoforming temperature of the second thermoforming step is lower than a first thermoforming temperature of the first thermoforming step,
wherein each dental model of a dental model set receives a unique model identifier to identify the at least first and second dental models of a set of dental models,
wherein the aligner is marked with a unique aligner identifier related to the unique model identifier of the related set of dental models, and
wherein the unique aligner identifier for said aligner is set to relate regressively to the previous dental model.

2. Method of producing a dental aligner according to claim 1, wherein the unique model identifier for a dental model includes one or a combination from the group of form and/or shape, number, colour, colour shade, code, chip, imprint.

3. Method of producing a dental aligner according to claim 1 or 2, wherein multiple dental models of one or of a plurality of sets of dental models for the same treatment plan or different treatment plans are produced randomly and/or batchwise, wherein
- the unique model identifiers include information about a related set of models
- the dental aligners to be thermoformed onto the dental models are provided with unique aligner identifiers, and
- the dental models and the dental aligners related thereto are being matched by using the unique model identifier and the matching unique aligner identifier.

4. Method of producing a dental aligner according to one of the claims 1 to 3, wherein the unique model identifier is detected to identify the second dental model to be used for the first thermoforming step and to apply the unique aligner identifier relating to the first dental model onto the aligner.

5. Production line for producing a dental aligner, preferably according to the method of one of the preceding claims, with
- a production unit (2) to produce a set of dental models with at least a first and a second dental model,
- a first thermoforming unit (3) to thermoform aligner material on the second dental model to produce an aligner and
- a second thermoforming unit (4) to thermoform the aligner on the first dental model to modify the shape of the aligner,
wherein attaching means to attach the unique model identifiers include one or a combination from the group comprising a 3D-Printer, a laser-device, a chip insertion device, a punching device, an embossing device, a colouring device and a printing device.

6. Production line according to claim 5, **characterized by** identifier means to attach and/or identifying means (14) to identify unique model identifiers of the dental models.

## Patentansprüche

1. Verfahren zur Herstellung eines dentalen Aligners für einen Behandlungsplan mit mindestens einer Ist-Position und einer Ziel-Position eines neu zu positionierenden Zahns, umfassend die folgenden Schritte
- Erstellen eines Satzes von Zahnmodellen, der mindestens
- ein erstes Zahnmodell auf der Grundlage der Ist-Position und
- ein zweites Zahnmodell, das auf der Ziel-Position basiert, aufweist;
- Durchführung eines ersten Thermoformungsschritts, bei dem ein Aligner-Material auf das zweite Zahnmodell geformt wird, um einen Aligner herzustellen;
- Entfernen des Aligners vom zweiten Zahnmodell;
- Anbringen des Aligners auf dem ersten Zahnmodell;
- Durchführung eines zweiten Thermoformungsschritts zur Neumodellierung des Aligners auf dem ersten Zahnmodell,
- wobei eine zweite Thermoformtemperatur des zweiten Thermoformungsschritts niedriger ist als eine erste Thermoformtemperatur des ersten Thermoformungsschritts,
wobei jedes Zahnmodell eines Zahnmodell-Satzes eine eindeutige Modellkennung erhält, um das zumindest erste und zweite Zahnmodell eines Satzes von Zahnmodellen zu identifizieren,
wobei der Aligner mit einer eindeutigen Aligner-Kennung markiert wird, die sich auf die eindeutige Modellkennung des zugehörigen Satzes von Zahnmodellen bezieht, und
wobei die eindeutige Aligner-Kennung für den genannten Aligner so festgelegt ist, dass sie regressiv auf das vorhergehende Zahnmodell verweist.

2. Verfahren zur Herstellung eines dentalen Aligners gemäß Anspruch 1, wobei die eindeutige Modellkennung für ein Zahnmodell eines oder eine Kombination aus der Gruppe bestehend aus Form und/oder Gestalt, Nummer, Farbe, Farbnuance, Code, Chip und Abdruck umfasst.

3. Verfahren zur Herstellung eines dentalen Aligners gemäß Anspruch 1 oder 2, wobei mehrere Zahnmodelle eines oder mehrerer Sätze von Zahnmodellen für denselben Behandlungsplan oder verschiedene Behandlungspläne zufällig und/oder chargenweise hergestellt werden, wobei
- die eindeutigen Modellkennungen Informationen über einen zugehörigen Satz von Modellen enthalten
- die auf die Zahnmodelle thermogeformten dentalen Aligner mit eindeutigen Aligner-Kennungen versehen sind und
- die Zahnmodelle und die dazugehörigen dentalen Aligner unter Verwendung der eindeutigen Modellkennung und der zugehörigen eindeutigen Aligner-Kennung einander zugeordnet werden.

4. Verfahren zur Herstellung eines dentalen Aligners gemäß einem der Ansprüche 1 bis 3, wobei die eindeutige Modellkennung erfasst wird, um das zweite Zahnmodell zu identifizieren, das für den ersten Thermoformungsschritt verwendet werden soll, und um die eindeutige Aligner-Kennung, die sich auf das erste Zahnmodell bezieht, auf den dentalen Aligner aufzubringen.

5. Produktionslinie zur Herstellung eines dentalen Aligners, vorzugsweise gemäß dem Verfahren nach einem der vorstehenden Ansprüche, mit
- einer Produktionseinheit (2) zur Herstellung eines Satzes von Zahnmodellen mit mindestens einem ersten und einem zweiten Zahnmodell,
- einer ersten Thermoform-Einheit (3) zum Thermoformen von Aligner-Material auf dem zweiten Zahnmodell zur Herstellung eines Aligners und
- eine zweite Thermoform-Einheit (4) zum Thermoformen des Aligners auf dem ersten Zahnmodell, um die Gestalt des Aligners zu modifizieren,
wobei Mittel zum Anbringen der eindeutigen Modellkennungen eines oder eine Kombination aus der Gruppe umfassen, die aus einem 3D-Drucker, einer Laservorrichtung, einer Chip-Einführvorrichtung, einer Stanzvorrichtung, einer Prägevorrichtung, einer Färbevorrichtung und einer Druckvorrichtung besteht.

6. Fertigungslinie nach Anspruch 5, **gekennzeichnet durch** Kennzeichnungsmittel zum Anbringen und/oder Identifizierungsmittel (14) zum Identifizieren eindeutiger Modellkennungen der Zahnmodelle.

## Revendications

1. Procédé de fabrication d'un aligneur dentaire pour un plan de traitement comprenant au moins une position réelle et une position cible d'une dent à re-positionner, comprenant les étapes suivantes
- produire un ensemble de modèles dentaires comprenant au moins
- un premier modèle dentaire basé sur la position réelle et
- un deuxième modèle dentaire basé sur la position cible ;
- réaliser une première étape de thermoformage consistant à façonner un matériau d'aligneur sur le deuxième modèle dentaire afin de produire un aligneur ;
- retirer l'aligneur du deuxième modèle dentaire ;
- placer l'aligneur sur le premier modèle dentaire ;
- réaliser une deuxième étape de thermoformage consistant à remodeler l'aligneur sur le premier modèle dentaire,
- dans lequel une deuxième température de thermoformage de la deuxième étape de thermoformage est inférieure à une première température de thermoformage de la première étape de thermoformage,
dans lequel chaque modèle dentaire d'un ensemble de modèles dentaires reçoit un identifiant de modèle unique pour identifier les au moins premier et deuxième modèles dentaires d'un ensemble de modèles dentaires,
dans lequel l'aligneur est marqué d'un identifiant d'aligneur unique lié à l'identifiant de modèle unique de l'ensemble de modèles dentaires associé, et
dans lequel l'identifiant unique d'aligneur pour ledit aligneur est défini de manière à être lié de manière régressive au modèle dentaire précédent.

2. Procédé de fabrication d'un aligneur dentaire selon la revendication 1, dans lequel l'identifiant de modèle unique pour un modèle dentaire comprend un élément ou une combinaison parmi le groupe constitué de la forme et/ou de la configuration, du numéro, de la couleur, de la nuance de couleur, du code, de la puce et de l'empreinte.

3. Procédé de fabrication d'un aligneur dentaire selon la revendication 1 ou 2, dans lequel plusieurs modèles dentaires d'un ou de plusieurs ensembles de modèles dentaires pour un même plan de traitement ou pour différents plans de traitement sont fabriqués de manière aléatoire et/ou par lots, dans lequel
- les identifiants de modèle uniques comprennent des informations sur un ensemble de modèles associé
- les aligneurs dentaires destinés à être thermoformés sur les modèles dentaires sont pourvus d'identificateurs d'aligneur uniques, et
- les modèles dentaires et les aligneurs dentaires qui leur sont associés sont appariés à l'aide de l'identifiant unique du modèle et de l'identifiant unique correspondant de l'aligneur.

4. Procédé de fabrication d'un aligneur dentaire selon l'une des revendications 1 à 3, dans lequel l'identifiant unique du modèle est détecté afin d'identifier le deuxième modèle dentaire à utiliser pour la première étape de thermoformage et d'appliquer l'identifiant unique de l'aligneur associé au premier modèle dentaire sur l'aligneur.

5. Ligne de production pour la fabrication d'un aligneur dentaire, de préférence selon le procédé de l'une des revendications précédentes, comprenant
- une unité de production (2) destinée à produire un ensemble de modèles dentaires comprenant au moins un premier et un deuxième modèle dentaire,
- une première unité de thermoformage (3) destinée à thermoformer le matériau de l'aligneur sur le deuxième modèle dentaire afin de produire un aligneur et
- une deuxième unité de thermoformage (4) destinée à thermoformer l'aligneur sur le premier modèle dentaire afin de modifier la forme de l'aligneur,
dans laquelle les moyens de appliquation destinés à fixer les identifiants uniques des modèles comprennent un élément ou une combinaison parmi le groupe comprenant une imprimante 3D, un dispositif laser, un dispositif d'insertion de puce, un dispositif de poinçonnage, un dispositif d'estampage, un dispositif de coloration et un dispositif d'impression.

6. Ligne de production selon la revendication 5, **caractérisée par** des moyens d'identification (14) destinés à appliquer et/ou à identifier les identifiants uniques des modèles dentaires.
